# EUROPÄISCHE PATENTSCHRIFT

(11) **EP 4 110 521 B1**
(45) Veröffentlichungstag und Bekanntmachung des Hinweises auf die Patenterteilung: **10.04.2024**
(21) Anmeldenummer: 21705441.0
(22) Anmeldetag: 05.02.2021
(51) Int. Cl.: B01J 47/024, H01M 8/04044

(54) **IONENTAUSCHERFILTERVORRICHTUNG UND IONENTAUSCHERKARTUSCHE**
ION EXCHANGER FILTER DEVICE AND ION EXCHANGER CARTRIDGE
DISPOSITIF DE FILTRE D'ÉCHANGEUR D'IONS ET CARTOUCHE D'ÉCHANGEUR D'IONS

(30) Priorität: 24.02.2020 DE 102020104720
(43) Veröffentlichungstag der Anmeldung: 04.01.2023
(73) Patentinhaber: MANN+HUMMEL GmbH, 71636 Ludwigsburg (DE)
(72) Erfinder: WILDERMUTH, Andreas, 71672 Marbach (DE); PFLÜGER, Frank, 74343 Sachsenheim (DE); ROLLE, Arndt-Udo, 70192 Stuttgart (DE); LEININGER, Simon, 70439 Stuttgart (DE)
(74) Vertreter: Mann + Hummel Intellectual Property
(86) Internationale Anmeldenummer: PCT/EP2021/052844
(87) Internationale Veröffentlichungsnummer: WO 2021/170377

(56) Entgegenhaltungen:
- WO-A1-2011/018508
- WO-A1-2012/104282
- DE-A1-102009 012 379
- DE-A1-102009 037 080

## Beschreibung

### Technisches Gebiet

Die Erfindung betrifft eine lonentauscherfiltervorrichtung, insbesondere für ein Brennstoffzellensystem, mit einem Gehäuse, in dem eine lonentauscherkartusche aufgenommen ist sowie eine lonentauscherkartusche für eine lonentauscherfiltervorrichtung.

### Stand der Technik

Brennstoffzellen haben einen elektrischen Wirkungsgrad von ungefähr 50%. Der Rest der Energie fällt als Wärme an. Diese muss abgeführt werden, um den Wirkungsgrad der Brennstoffzelle so hoch wie möglich zu halten. Dafür umspült ein Kühlmedium die Zellen. Bei einer elektrischen Leitfähigkeit des Kühlmediums kann es zu einem Kurzschluss zwischen den Zellen kommen. Deshalb ist eine Deionisierung über einen Ionentauscher notwendig. Da die Kühlflüssigkeit auch weitere Eigenschaften wie Frostschutz erfüllen muss, kommen hier Mischungen zum Einsatz, z.B. deionisiertes Wasser und Monoethylenglykol in einem Verhältnis von 50:50.

DE102009012379A1 offenbart eine lonentauscherkartusche für ein Kühlmittelsystem eines Brennstoffzellenstapels ein Gehäuse, das derart angepasst ist, um ein Ionentauscherharz darin zu enthalten. Das Gehäuse besitzt einen Einlass und zumindest ein mediumpermeables Auslassfenster, das für einen Durchfluss von Kühlmittel konfiguriert ist. Die lonentauscherkartusche ist derart angepasst, dass sie in dem Kühlmittelsystem entfernbar angeordnet ist. DE102009012379A1 offenbart dazu weiter eine lonentauscherkartuschenanordnung, welche die lonentauscherkartusche umfasst. Die lonentauscherkartuschenanordnung umfasst eine Halterung, die mit der lonentauscherkartusche gekoppelt ist. Die Halterung ist zur Entfernung der lonentauscherkartusche von dem Kühlmittelsystem angepasst.

WO 2011/018508 A1 offenbart ebenfalls eine lonentauscherfiltervorrichtung, insbesondere für ein Brennstoffzellensystem, mit einem Gehäuse, in dem eine lonentauscherkartusche aufgenommen ist.

### Offenbarung der Erfindung

Eine Aufgabe der Erfindung ist es, eine bauraumgünstige, wartungsfreundliche Ionentauscherfiltervorrichtung mit einer verbesserten Entlüftungsmöglichkeit anzugeben.

Eine weitere Aufgabe ist es, eine lonentauscherkartusche für eine bauraumgünstige, wartungsfreundliche lonentauscherfiltervorrichtung mit einer verbesserten Entlüftungsmöglichkeit anzugeben.

Die vorgenannte Aufgabe wird nach einem Aspekt der Erfindung gelöst von einer lonentauscherfiltervorrichtung gemäß Anspruch 1.

Die weitere Aufgabe wird nach einem weiteren Aspekt der Erfindung gelöst durch die Verwendung einer lonentauscherkartusche in einer Ionentauscherfiltervorrichtung nach einem der Ansprüche 1-8 gemäß Anspruch 9.

Günstige Ausgestaltungen und Vorteile der Erfindung ergeben sich aus den weiteren Ansprüchen, der Beschreibung und der Zeichnung.

Es wird eine lonentauscherfiltervorrichtung vorgeschlagen, insbesondere für ein Brennstoffzellensystem, mit einem Gehäuse, in dem eine lonentauscherkartusche aufgenommen ist, wobei das Gehäuse zumindest eine Einströmöffnung und zumindest eine Ausströmöffnung für ein Medium aufweist, und wobei die zumindest eine Einströmöffnung und die zumindest eine Ausströmöffnung eine Wandung des Gehäuses durchbrechen. Ein Strömungsweg verläuft von der Einströmöffnung durch die lonentauscherkartusche zur Ausströmöffnung. Die lonentauscherkartusche weist einen Kartuschenbehälter mit einem Aufnahmeraum auf, der mit lonentauschermaterial gefüllt und durch eine umlaufende Wandung begrenzt ist, die am oder über ihren Umfang verteilt ein oder mehrere Ausströmfenster aufweist.

Erfindungsgemäß sind das oder die Ausströmfenster der lonentauscherkartusche bezüglich der Ausströmöffnung des Gehäuses in axialer Richtung versetzt angeordnet, wobei der Strömungsweg stromabwärts der Ausströmfenster der lonentauscherkartusche wenigstens eine Umlenkung, insbesondere um mindestens 45 Grad aufweist, bevorzugt um 90 Grad. Die Strömung verlässt die Ausströmfenster im Wesentlichen in Radialrichtung um anschließend die Umlenkung zu erfahren.

Gemäß einer bevorzugten Weiterbildung kann die Ausströmöffnung eine Mantelwandung des Gehäuses durchbrechen. In einer weiteren Ausführungsvariante kann auch die Einströmöffnung eine Mantelwandung des Gehäuses durchbrechen, wobei die Einströmöffnung alternativ aber auch in einer Stirnwandung vorgesehen sein kann.

Durch die Umlenkung verläuft der Strömungsweg stromabwärts der Ausströmfenster abschnittsweise entgegen eines Strömungsweges innerhalb des Kartuschenkörpers.

Günstigerweise kann die lonentauscherfiltervorrichtung zur Deionisierung von Wasser eingesetzt werden, beispielsweise für Brennkraftmaschinen mit Wassereinspritzung, Brennstoffzellensysteme und dergleichen.

Eine Verbesserung des Herstellungsprozesses der lonentauscherkartusche kann vorteilhaft durch einen Kartuschenbehälter mit umspritztem Siebgewebe erzielt werden, wobei das Siebgewebe sowohl die Einströmöffnung als auch die zumindest eine Ausströmöffnung der lonentauscherkartusche abdecken kann. Vorteil dieses Designs ist, dass nur bei einem Bauteil eine Umspritzung erforderlich ist. Dabei kann die Einströmöffnung idealerweise senkrecht zur axialen Richtung, beispielsweise im Boden der lonentauscherkartusche und die zumindest eine Ausströmöffnung bezüglich der axialen Richtung der lonentauscherkartusche radial orientiert sein in der Wandung der lonentauscherkartusche. Das Verschließen des mit dem lonentauschermaterial, wie beispielsweise lonentauscherharz, befüllten Kartuschenbehälters kann direkt mit dem Deckel des Gehäuses der lonentauscherfiltervorrichtung erfolgen, so dass diese Baugruppe um ein Bauteil reduziert werden kann.

Dieser Deckel stellt sicher, dass das lonentauschermaterial in der lonentauscherkartusche verbleibt und kann im Betrieb auch das Gehäuse gegen die Umgebung abdichten.

Der Bauraum kann bei der erfindungsgemäßen lonentauscherfiltervorrichtung günstig ausgenutzt werden, da auch oberhalb der Ausströmöffnung der lonentauscherfiltervorrichtung lonentauschermaterial angeordnet werden kann, wenn die lonentauscherkartusche sich in axialer Richtung über die Ausströmöffnung hinaus erstreckt. Das Kühlmedium kann dann bis an die Innenseite des Deckels strömen, wo es umgelenkt wird und über einen Ringspalt zwischen Kartuschenbehälter und Deckel der lonentauscherfiltervorrichtung entgegen der bisherigen Strömungsrichtung zurück zur Ausströmöffnung geführt werden kann.

Die Umlenkung der Strömung beim Eintritt in den Ringspalt kann dabei homogenisierend auf die Strömung wirken, so dass das gesamte lonentauschermaterial gleichmäßig aufgebraucht wird und sich bzgl. der Strömung keine Toträume bilden.

Eine bezüglich der Schwererichtung weit oben am Gehäuse der lonentauscherfiltervorrichtung liegende Anordnung der Ausströmöffnung kann wiederum gewährleisten, dass die lonentauscherfilteranordnung ausreichend gut entlüftet werden kann.

Des Weiteren gewährleistet die erfindungsgemäße lonentauscherfiltervorrichtung, dass alle servicerelevanten Teile in einem Arbeitsgang ausgetauscht werden können. Das umfasst insbesondere lonentauschermaterial und Dichtungen zwischen lonentauscherkartusche und Gehäuse der lonentauscherfiltervorrichtung.

Erfindungsgemäß sind die Ausströmfenster der lonentauscherkartusche bezüglich einer Schwererichtung in einer bestimmungsgemäßen Montageposition axial oberhalb der Ausströmöffnung des Gehäuses angeordnet sein. Dadurch kann der Bauraum bei der erfindungsgemäßen Ionentauscherfiltervorrichtung besonders günstig ausgenutzt werden, da auch oberhalb der Ausströmöffnung der lonentauscherfiltervorrichtung lonentauschermaterial angeordnet werden kann. Das Kühlmedium strömt dann bis an die Innenseite des Deckels, wo es umgelenkt wird und über einen Ringspalt zwischen Kartuschenbehälter und Deckel der lonentauscherfiltervorrichtung entgegen der bisherigen Strömungsrichtung zurück zur Ausströmöffnung geführt wird.

Erfindungsgemäß ist die Ausströmöffnung in einem oberen Drittel einer Gehäusehöhe des Gehäuses angeordnet sein. Auf diese Weise kann bei der Anordnung des Ausströmfensters der lonentauscherkartusche oberhalb der Ausströmöffnung des Gehäuses eine günstige Strömungsverteilung, sowie ein günstiger Strömungswiderstand der lonentauscherfiltervorrichtung erreicht werden.

Nach einer günstigen Ausgestaltung der lonentauscherfiltervorrichtung können die Ausströmfenster der lonentauscherkartusche in einem axial oberen Viertel des Aufnahmeraums angeordnet sein. Bei dieser Anordnung der Ausströmfenster ist es möglich, das lonentauschermaterial in der lonentauscherkartusche besonders günstig auszunutzen, bevor es bei einem Wartungsprozess zu ersetzen ist.

Nach einer günstigen Ausgestaltung der lonentauscherfiltervorrichtung kann Siebgewebe vor den Ausströmfenstern der lonentauscherkartusche angeordnet sein. Das Siebgewebe ermöglicht eine günstigen strömungswiderstandsarmen Durchtritt der Mediumströmung und hält gleichzeitig das lonentauschermaterial in der lonentauscherkartusche zurück. Die Ausströmfenster des Kartuschenbehälters können damit in einer günstigen Größe dimensioniert werden.

Nach einer günstigen Ausgestaltung der lonentauscherfiltervorrichtung kann das Gehäuse einen Einströmstutzen aufweisen, welcher bevorzugt in einem unteren Drittel einer Gehäusehöhe des Gehäuses angeordnet ist. Die Mediumströmung kann so günstig am Boden der lonentauscherkartusche durch ein Einströmfenster in den Kartuschenbehälter geleitet werden. Der Strömungswiderstand kann durch die niedrige Anordnung des Einströmstutzens niedrig gehalten werden.

Nach einer günstigen Ausgestaltung der lonentauscherfiltervorrichtung kann die lonentauscherkartusche zumindest eine umlaufende Dichtung, insbesondere eine umlaufende, im Wesentlichen in radialer Richtung dichtende Dichtung, aufweisen, welche insbesondere an einem den Ausströmfenstern abgewandten axialen Endbereich angeordnet ist. Mit einer solchen umlaufenden radial wirkenden Dichtung kann die lonentauscherkartusche am unteren Ende bei der bestimmungsgemäßen Montage im Gehäuse der lonentauscherfiltervorrichtung wirksam abgedichtet werden, so dass eine Trennung zwischen ungefiltertem und gefiltertem Medium gewährleistet ist. Die Dichtung ist bevorzugt am Deckel gehalten, insbesondere in einer an einen Gewindeabschnitt angrenzenden Dichtungsnut.

Nach einer günstigen Ausgestaltung der lonentauscherfiltervorrichtung kann das lonentauschermaterial als Schüttung vorliegen. Die Schüttung, beispielsweise in Form von Ionentauscherharzpartikeln, weist eine große Oberfläche auf, so dass die Wirksamkeit und effektive Ausnutzung des lonentauschermaterials gegeben ist und eine lange Standzeit der lonentauscherkartusche erreicht werden kann.

Erfindungsgemäß ist der Deckel des Gehäuses stoffschlüssig mit dem Kartuschenbehälter verbunden.

Auf diese Weise kann die lonentauscherkartusche kostengünstig hergestellt werden. Außerdem kann eine wirksame Abdichtung des Innenraums der lonentauscherfiltervorrichtung gegen die Umgebung dargestellt werden. Damit ist die Trennung zwischen gefiltertem und ungefiltertem Medium auf effektive Art möglich.

Erfindungsgemäß weist der Deckel einen Übergriffsbereich, insbesondere einen Verbindungsabschnitt, insbesondere einen Gewindeabschnitt, auf, welcher in axialer Richtung die Ausströmfenster vollständig überlappt.

Die lonentauscherkartusche kann mit dem Übergriffsbereich leicht in das Gehäuse eingesetzt und damit verbunden werden. Insbesondere kann der Übergriffsbereich hierzu einen Gewindeabschnitt aufweisen, welcher mit einem am Gehäuse der lonentauscherfiltervorrichtung angeordneten Gegengewinde zusammenwirkt. Durch die Überlappung kann das Ausströmfenster am oberen Ende des Aufnahmeraums des Kartuschenbehälters angeordnet werden, so dass eine effektive Ausnutzung des lonentauschermaterials gegeben ist. Das gefilterte Medium kann durch das Ausströmfenster in einem Spalt zwischen Übergriffsbereich und Wandung des Kartuschenbehälters zur Ausströmöffnung des Gehäuses geleitet werden.

Nach einem weiteren Aspekt der Erfindung wird die Verwendung der Ionentauscherkartusche in einer Ionentauscherfiltervorrichtung vorgeschlagen, mit einem Kartuschenbehälter, der einen Aufnahmeraum aufweist, der mit lonentauschermaterial gefüllt und durch eine umlaufende Wandung begrenzt ist, die am oder über ihren Umfang verteilt ein oder mehrere Ausströmfenster aufweist.

Erfindungsgemäß ist die Wandung stoffschlüssig mit dem Kartuschenbehälter verbunden, wobei der Deckel bestimmungsgemäß als Deckel eines Gehäuses der lonentauscherfiltervorrichtung zur Aufnahme der lonentauscherkartusche vorgesehen ist.

Eine Verbesserung des Herstellungsprozesses der lonentauscherkartusche kann vorteilhaft durch einen Kartuschenbehälter mit umspritztem Siebgewebe erzielt werden, wobei das Siebgewebe sowohl die Einströmöffnung als auch die zumindest eine Ausströmöffnung der lonentauscherkartusche abdeckt. Vorteil dieses Designs ist, dass nur bei einem Bauteil eine Umspritzung erforderlich ist. Dabei ist die Einströmöffnung idealerweise senkrecht und die zumindest eine Ausströmöffnung ist bezüglich einer axialen Richtung der lonentauscherkartusche radial orientiert.

Das Verschließen des mit dem lonentauschermaterial wie beispielsweise lonentauscherharz befüllten Kartuschenbehälters kann direkt mit dem Deckel des Gehäuses der lonentauscherfiltervorrichtung erfolgen, so dass diese Baugruppe um ein Bauteil reduziert werden kann.

Auf diese Weise kann die lonentauscherkartusche kostengünstig hergestellt werden. Außerdem kann eine wirksame Abdichtung des Innenraums der lonentauscherfiltervorrichtung gegen die Umgebung dargestellt werden. Damit ist die Trennung zwischen gefiltertem und ungefiltertem Medium auf effektive Art möglich.

Nach einer günstigen Ausgestaltung der lonentauscherkartusche weist der Deckel einen Übergriffsbereich, insbesondere einen Verbindungsabschnitt, insbesondere einen Gewindeabschnitt, auf, welcher in axialer Richtung die Wandung vollständig überlappt. Die lonentauscherkartusche kann mit dem Übergriffsbereich leicht in das Gehäuse eingesetzt und mit diesem verbunden werden. Insbesondere kann der Übergriffsbereich einen Gewindeabschnitt aufweisen, welcher mit einem am Gehäuse der lonentauscherfiltervorrichtung angeordneten Gegengewinde zusammenwirkt. Durch die Überlappung kann das Ausströmfenster am oberen Ende des Aufnahmeraums des Kartuschenbehälters angeordnet werden, so dass eine effektive Ausnutzung des lonentauschermaterials gegeben ist. Das gefilterte Medium kann durch das Ausströmfenster in einem Spalt zwischen Übergriffsbereich und Wandung des Kartuschenbehälters zur Ausströmöffnung des Gehäuses geleitet werden.

Es ist zwischen dem Übergriffsbereich und der Wandung ein Ringspalt ausgebildet. Der Bauraum kann bei der erfindungsgemäßen lonentauscherfiltervorrichtung günstig ausgenutzt werden, da auch oberhalb der Ausströmöffnung der lonentauscherfiltervorrichtung lonentauschermaterial angeordnet werden kann. Das Kühlmedium strömt dann bis an die Innenseite des Deckels, wo es umgelenkt wird und über den Ringspalt zwischen Kartuschenbehälter und Deckel der lonentauscherfiltervorrichtung entgegen der bisherigen Strömungsrichtung zurück zur Ausströmöffnung geführt wird. Der Ringspalt wirkt dabei homogenisierend auf die Strömung, so dass das gesamte lonentauschermaterial gleichmäßig aufgebraucht wird und sich bzgl. der Strömung keine Toträume bilden.

Erfindungsgemäß sind das oder die Ausströmfenster in einem vom Übergriffsbereich überlappten Bereich der Wandung angeordnet sein. Durch die Überlappung kann das Ausströmfenster am oberen Ende des Aufnahmeraums des Kartuschenbehälters angeordnet werden, so dass eine effektive Ausnutzung des lonentauschermaterials gegeben ist. Das gefilterte Medium kann durch das Ausströmfenster in einem Spalt zwischen Übergriffsbereich und Wandung des Kartuschenbehälters zur Ausströmöffnung des Gehäuses geleitet werden.

Ferner weist ein Strömungsweg eines Mediums durch die lonentauscherkartusche stromabwärts der Ausströmfenster wenigstens eine Umlenkung innerhalb des Spalts auf. Die Umlenkung der Strömung beim Eintritt in den Ringspalt wirkt dabei homogenisierend auf die Strömung, so dass das gesamte lonentauschermaterial gleichmäßig aufgebraucht wird und sich bzgl. der Strömung keine Toträume bilden.

Nach einem weiteren Aspekt der Erfindung wird ein Brennstoffzellensystem mit einer erfindungsgemäßen lonentauscherfiltervorrichtung vorgeschlagen. Vorteilhaft ergibt sich durch Integration der lonentauscherfiltervorrichtung in das Brennstoffzellensystem eine kompakte Anlage, welche kostengünstig und wartungsfreundlich zu betreiben ist.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, Beschreibung und Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: eine lonentauscherfiltervorrichtung nach einem Ausführungsbeispiel der Erfindung in isometrischer Ansicht;
- Fig. 2: eine Draufsicht in die längsgeschnittene lonentauscherfiltervorrichtung nach Figur 1;
- Fig. 3: eine lonentauscherkartusche für eine lonentauscherfiltervorrichtung nach einem Ausführungsbeispiel der Erfindung;
- Fig. 4: die lonentauscherkartusche nach Figur 3 mit teilweise angeschnittenem Übergriffsbereich.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

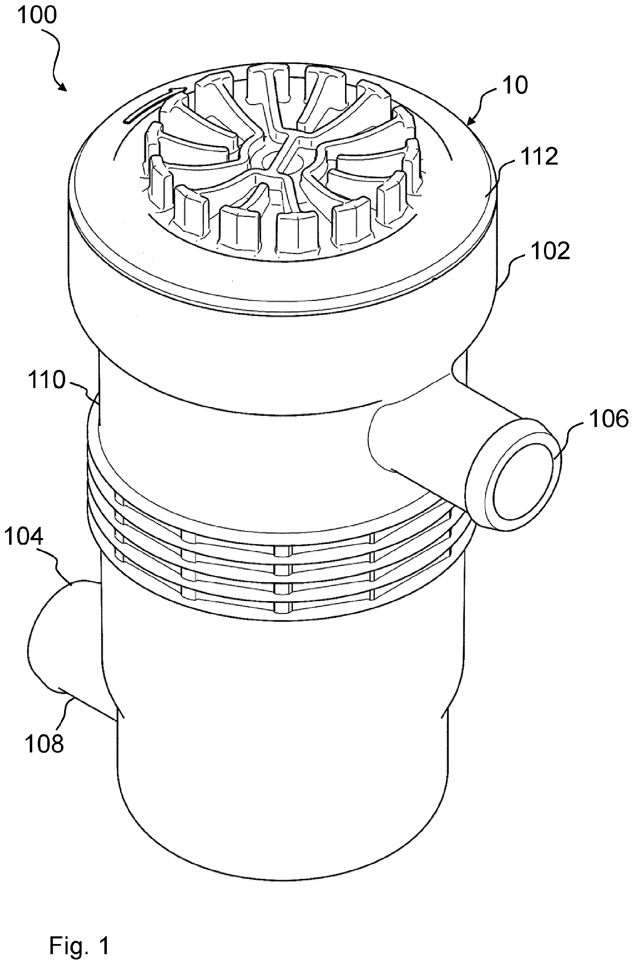

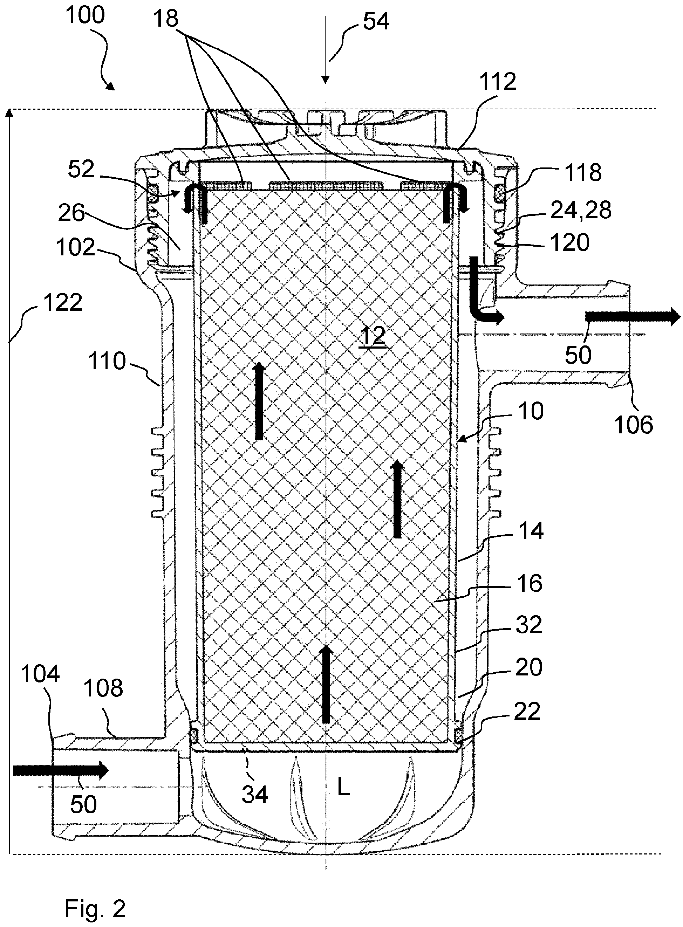

Figuren 1 und 2 zeigen eine lonentauscherfiltervorrichtung 100 nach einem Ausführungsbeispiel der Erfindung, welche insbesondere für ein Brennstoffzellensystem vorgesehen ist. Die lonentauscherfiltervorrichtung 100 ist in Figur 1 in isometrischer Ansicht und in Figur 2 in einem Längsschnitt dargestellt.

Die lonentauscherfiltervorrichtung 100 weist ein Gehäuse 102 auf, in dem eine Ionentauscherkartusche 10 aufgenommen ist. Das Gehäuse 102 weist zumindest eine Einströmöffnung 104 und zumindest eine Ausströmöffnung 106 für ein Medium, beispielsweise ein Kühlmedium, auf, wobei die zumindest eine Einströmöffnung 104 und die zumindest eine Ausströmöffnung 106 eine Mantelwandung 110 des Gehäuses 102 durchbrechen.

Das Gehäuse 102 weist einen Einströmstutzen 108 mit der Einströmöffnung 104 auf, welcher bevorzugt in einem unteren Drittel einer Gehäusehöhe 122 des Gehäuses 102 angeordnet ist, wobei die Ausströmöffnung 106 in einem oberen Drittel einer Gehäusehöhe 122 des Gehäuses 102 angeordnet ist.

Ein Strömungsweg 50 verläuft von der Einströmöffnung 104 des Einströmstutzens 108 durch die lonentauscherkartusche 10 zur Ausströmöffnung 106.

Die lonentauscherkartusche 10 weist einen Kartuschenbehälter 14 mit einem Aufnahmeraum 16 auf, der mit lonentauschermaterial 12 gefüllt und durch eine umlaufende Wandung 32 begrenzt ist, die über ihren Umfang verteilt mehrere Ausströmfenster 18 aufweist. Die Ausströmfenster 18 der lonentauscherkartusche 10 sind bezüglich der Ausströmöffnung 106 des Gehäuses 102 in axialer Richtung L versetzt angeordnet. Die Ausströmfenster 18 sind bezüglich einer Schwererichtung 54 in der dargestellten bestimmungsgemäßen Montageposition axial oberhalb der Ausströmöffnung 106 des Gehäuses 102 angeordnet.

Das lonentauschermaterial 12 im Aufnahmeraum 16 ist als Schüttung vorgesehen und kann beispielsweise ein lonentauscherharz in Partikelform enthalten.

Durch die Anordnung der Ausströmfenster 18 weist der Strömungsweg 50 stromabwärts der Ausströmfenster 18 der lonentauscherkartusche 10 eine Umlenkung 52, insbesondere um mindestens 45 Grad, auf.

Der Bauraum kann bei der erfindungsgemäßen lonentauscherfiltervorrichtung 100 günstig ausgenutzt werden, da auch oberhalb der Ausströmöffnung 106 der lonentauscherfiltervorrichtung 100 lonentauscherharz angeordnet werden kann.

Das Kühlmedium strömt über die Einströmöffnung 104 des Einströmstutzens 108 des Gehäuses 102 in den unteren Innenraum des Gehäuses 102. Dort kann das Medium durch das im unteren Endbereich 20 des Kartuschenbehälters 14 angeordnete, in der Darstellung nicht erkennbare Einströmfenster 34 in den Kartuschenbehälter 14 eintreten und durch das lonentauschermaterial 12 strömen. Das Medium kann durch Ausströmfenster 18 bis an die Innenseite des Deckels 112 strömen, wo es umgelenkt und über einen Ringspalt 26 zwischen Kartuschenbehälter 14 und Deckel 112 der lonentauscherfiltervorrichtung 100 entgegen der bisherigen Strömungsrichtung zurück zur Ausströmöffnung 106 geführt wird.

Die Umlenkung 52 der Strömung beim Eintritt in den Ringspalt 26 wirkt dabei homogenisierend auf die Strömung, so dass das gesamte lonentauscherharz gleichmäßig aufgebraucht wird und sich bzgl. der Strömung keine Toträume bilden.

Die bzgl. der Schwererichtung 54 weit oben liegende Anordnung der Ausströmöffnung 106 gewährleitet wiederum, dass die lonentauscherfilteranordnung 100 ausreichend gut entlüftet werden kann.

Die lonentauscherkartusche 10 weist am unteren den Ausströmfenstern 18 abgewandten axialen Endbereich 20 eine umlaufende Dichtung 22, insbesondere eine umlaufende im Wesentlichen in radialer Richtung dichtende Dichtung, auf, welche zur Abdichtung an der Innenseite der Mantelwandung 110 des Gehäuses 102 dient.

Der Deckel 112 des Gehäuses 102 ist einteilig mit der lonentauscherkartusche 10 ausgebildet, so dass der Aufnahmeraum 16 des Kartuschenbehälters 14 durch den Deckel 112 gegen die Umgebung abgedichtet ist. Der Deckel 112 weist einen Übergriffsbereich 24 auf, welcher in axialer Richtung L die Ausströmfenster 18 überlappt. Der Übergriffsbereich 24 ist als Verbindungsabschnitt 28 mit einem Gewindeabschnitt ausgebildet.

Die lonentauscherkartusche 10 kann bei bestimmungsgemäßer Montage der Ionentauscherfiltervorrichtung mit dem Deckel 112 in das Gehäuse 102 eingeschoben und über den Deckel 112 mit dem Gehäuse 102 verbunden werden. Dabei greift der Gewindeabschnitt des Verbindungsabschnitts 28 in das Gegengewinde 120 des Gehäuses 102 ein. Eine radial wirkende umlaufende Dichtung 118 axial oberhalb des Gewindes des Verbindungsbereichs 28 ist für die Abdichtung zwischen Deckel 112 und Gehäuse 102 vorgesehen.

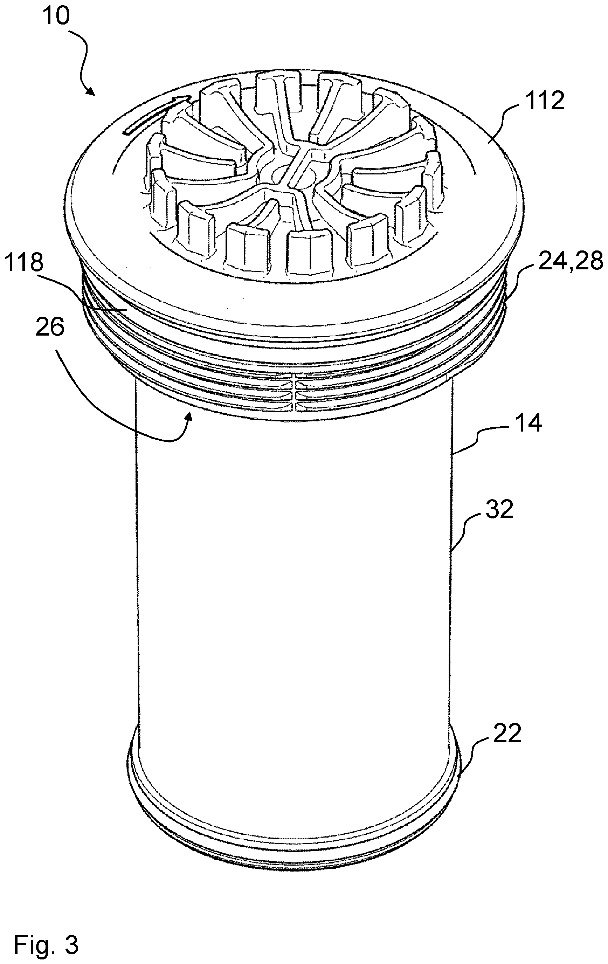

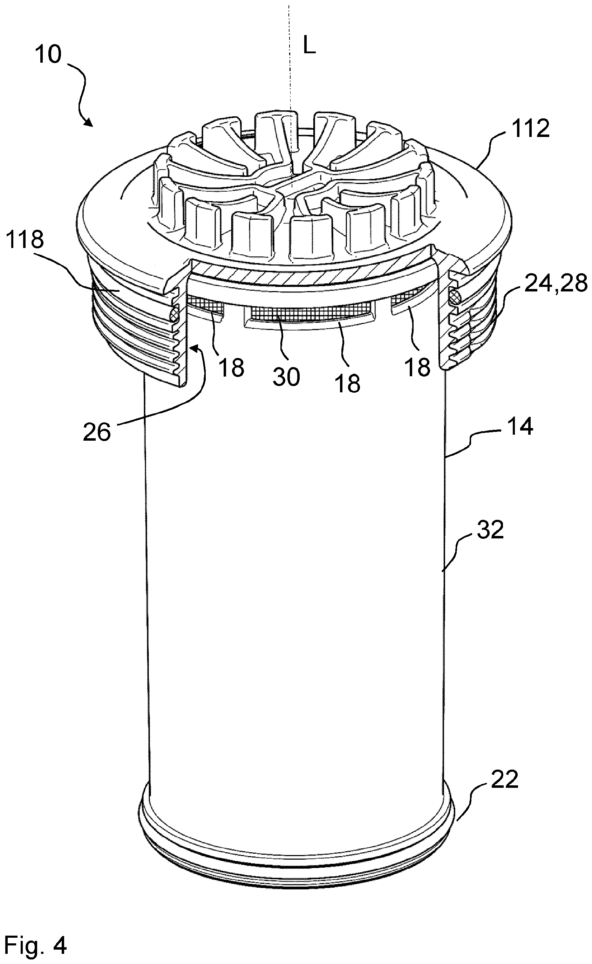

Figur 3 zeigt eine lonentauscherkartusche 10 für eine lonentauscherfiltervorrichtung 100 nach einem Ausführungsbeispiel der Erfindung. In Figur 4 ist die lonentauscherkartusche 10 nach Figur 3 mit teilweise angeschnittenem Übergriffsbereich.24 dargestellt, so dass die Ausströmfenster 18 zu erkennen sind.

Die lonentauscherkartusche 10 weist einen Kartuschenbehälter 14 auf mit einem, im Längsschnitt in Figur 2 ersichtlichen, Aufnahmeraum 16, der mit lonentauschermaterial 12 gefüllt und durch eine umlaufende Wandung 32 begrenzt ist. Die Wandung 32 weist über ihren Umfang verteilt mehrere Ausströmfenster 18 auf.

Die Wandung 32 ist einteilig mit einem Deckel 112 ausgebildet, der bestimmungsgemäß als Deckel 112 des Gehäuses 102 der in Figuren 1 und 2 dargestellten lonentauscherfiltervorrichtung 100 zur Aufnahme der lonentauscherkartusche 10 vorgesehen ist.

Wie insbesondere in Figur 4 zu erkennen ist, sind die Ausströmfenster 18 der Ionentauscherkartusche 10 in einem axial oberen Viertel des Aufnahmeraums 16 angeordnet. Weiter ist Siebgewebe 30 im Aufnahmeraum 14 vor den Ausströmfenstern 18 der lonentauscherkartusche 10 angeordnet, um der Strömung des Mediums zu ermöglichen, aus dem Kartuschenbehälter 14 auszutreten und zugleich die Schüttung des lonentauschermaterials 12 zurückzuhalten.

Der Deckel 112 weist einen Übergriffsbereich 24, insbesondere einen Verbindungsabschnitt 28 mit einem Gewindeabschnitt zur Verbindung mit dem Gehäuse 102 der lonentauscherfiltervorrichtung 100 auf, welcher in axialer Richtung L die Wandung 32 vollständig überlappt.

Dadurch, dass der Übergriffsbereich 24 in einem Abstand zur Wandung 32 des Kartuschenbehälters 14 angeordnet ist, ist zwischen dem Übergriffsbereich 24 und der Wandung 32 ein Ringspalt (26) ausgebildet. Die Ausströmfenster 18 sind in dem vom Übergriffsbereich 24 überlappten Bereich der Wandung 32, also im Bereich des Spalts 26, angeordnet. Dadurch weist ein Strömungsweg 50 eines Mediums durch die lonentauscherkartusche 10 stromabwärts der Ausströmfenster 18 eine Umlenkung 52 innerhalb des Spalts 26 auf. Die Umlenkung 52 der Strömung beim Eintritt in den Ringspalt 26 wirkt dabei homogenisierend auf die Strömung, so dass das gesamte Ionentauscherharz gleichmäßig aufgebraucht wird und sich bzgl. der Strömung keine Toträume bilden.

## Patentansprüche

1. lonentauscherfiltervorrichtung (100), insbesondere für ein Brennstoffzellensystem, mit einem Gehäuse (102), in dem eine lonentauscherkartusche (10) aufgenommen ist,
wobei das Gehäuse (102) einen Deckel (112) umfasst,
wobei das Gehäuse (102) zumindest eine Einströmöffnung (104) und zumindest eine Ausströmöffnung (106) für ein Medium aufweist, wobei die zumindest eine Einströmöffnung (104) und die zumindest eine Ausströmöffnung (106) eine Wandung des Gehäuses (102) durchbrechen,
wobei ein Strömungsweg (50) von der Einströmöffnung (104) durch die Ionentauscherkartusche (10) zur Ausströmöffnung (106) verläuft,
wobei die lonentauscherkartusche (10) einen Kartuschenbehälter (14) mit einem Aufnahmeraum (16) aufweist, der mit lonentauschermaterial (12) gefüllt und durch eine umlaufende Wandung (32) begrenzt ist, die am oder über ihren Umfang verteilt ein oder mehrere Ausströmfenster (18) aufweist,
wobei das oder die Ausströmfenster (18) der lonentauscherkartusche (10) bezüglich der Ausströmöffnung (106) des Gehäuses (102) in axialer Richtung (L) versetzt angeordnet sind, wobei der Strömungsweg (50) stromabwärts der Ausströmfenster (18) der lonentauscherkartusche (10) wenigstens eine Umlenkung (52), insbesondere um mindestens 45 Grad aufweist, wobei die Ausströmfenster (18) der lonentauscherkartusche (10) bezüglich einer Schwererichtung (54) in einer bestimmungsgemäßen Montageposition axial oberhalb der Ausströmöffnung (106) des Gehäuses (102) angeordnet sind,
**dadurch gekennzeichnet, dass** die Ausströmöffnung (106) in einem oberen Drittel einer Gehäusehöhe (122) des Gehäuses (102) angeordnet ist und dass die Wandung (32) des Kartuschenbehälters (14) stoffschlüssig mit dem Deckel (112) des Gehäuses (102) verbunden ist, wobei der Deckel (112) einen Übergriffsbereich (24) aufweist, der in axialer Richtung (L) die Ausströmfenster (18) unter Ausbildung eines Ringspalts (26) vollständig überlappt und wobei ein Strömungsweg (50) eines Mediums durch die lonentauscherkartusche (10) stromabwärts der Ausströmfenster (18) die Umlenkung (52) innerhalb des Ringspalts (26) aufweist.

2. lonentauscherfiltervorrichtung nach Anspruch 1, **dadurch gekennzeichnet, dass** die Ausströmöffnung (106) eine Mantelwandung (110) des Gehäuses (102) durchbricht.

3. lonentauscherfiltervorrichtung nach einem der vorhergehenden Ansprüche, **dadurch gekennzeichnet, dass** die Ausströmfenster (18) der lonentauscherkartusche (10) in einem axial oberen Viertel des Aufnahmeraums (16) angeordnet sind.

4. lonentauscherfiltervorrichtung nach einem der vorhergehenden Ansprüche, **dadurch gekennzeichnet, dass** die Ausströmfenster (18) der lonentauscherkartusche (10) von einem Siebgewebe (30) bedeckt sind.

5. lonentauscherfiltervorrichtung nach einem der vorhergehenden Ansprüche, **dadurch gekennzeichnet, dass** das Gehäuse (102) einen Einströmstutzen (108) aufweist, welcher bevorzugt in einem unteren Drittel einer Gehäusehöhe (122) des Gehäuses (102) angeordnet ist.

6. lonentauscherfiltervorrichtung nach einem der vorhergehenden Ansprüche, **dadurch gekennzeichnet, dass** die lonentauscherkartusche (10) zumindest eine umlaufende Dichtung (22), insbesondere eine umlaufende, im Wesentlichen in radialer Richtung dichtende Dichtung, aufweist, welche insbesondere an einem den Ausströmfenstern (18) abgewandten axialen Endbereich (20) angeordnet ist.

7. lonentauscherfiltervorrichtung nach einem der vorhergehenden Ansprüche, **dadurch gekennzeichnet, dass** das lonentauschermaterial (12) als Schüttung vorliegt.

8. lonentauscherfiltervorrichtung nach einem der vorhergehenden Ansprüche, **dadurch gekennzeichnet, dass** der Übergriffsbereich (24) als Verbindungsabschnitt (28) zur Verbindung der lonentauscherkartusche (10) mit dem Gehäuse (102) ausgebildet ist, insbesondere als Gewindeabschnitt.

9. Verwendung einer lonentauscherkartusche (10) in einer lonentauscherfiltervorrichtung (100) nach einem der vorhergehenden Ansprüche.

10. Verwendung nach Anspruch 9, **dadurch gekennzeichnet, dass** in dem Gewindeabschnitt des Übergriffsbereichs (24) ein Außengewinde vorliegt.

11. Brennstoffzellensystem mit einer lonentauscherfiltervorrichtung (100) nach einem der Ansprüche 1 bis 8.

## Claims

1. An ion exchange filter apparatus (100), in particular for a fuel cell system, having a housing (102) accommodating an ion exchange cartridge (10), wherein the housing (102) comprises a cover (112),
wherein the housing (102) features at least one inlet port (104) and at least one outlet port (106) for a medium, wherein the at least one inlet port (104) and the at least one outlet port (106) break through a wall of the housing (102),
wherein a flow path (50) extends from the inlet port (104) through the ion exchange cartridge (10) to the outlet port (106),
wherein the ion exchange cartridge (10) features a cartridge container (14) having a receiving space (16) filled with ion exchange material (12) and delimited by a circumferential wall (32), which features one or a plurality of exit windows (18) distributed at or across its circumference,
wherein the exit window or windows (18) of the ion exchange cartridge (10) are offset in the axial direction (L) with respect to the outlet port (106) of the housing (102), wherein the flow path (50) downstream of the exit windows (18) of the ion exchange cartridge (10) features at least one deviation (52), in particular of at least 45 degrees, wherein the exit windows (18) of the ion exchange cartridge (10) are disposed axially above the outlet port (106) of the housing (102) with respect to a gravitational direction (54) in a mounting position,
**characterized in that** the outlet port (106) is disposed in an upper third of a housing height (122) of the housing (102) and **in that** the wall of the cartridge container (14) is connected to the cover (112) of the housing (102) in a material locking manner, wherein the cover (112) features an overlapping area (24), which completely overlaps the exit windows (18) in the axial direction (L) by forming an annular gap (26) and wherein a flow path (50) of a medium through the ion exchange cartridge (10) downstream of the exit windows (18) features the deviation (52) within the annular gap (26).

2. The ion exchange filter apparatus according to claim 1, **characterized in that** the outlet port (106) breaks through a shroud wall (110) of the housing (102).

3. The ion exchange filter apparatus according to one of the preceding claims, **characterized in that** the exit windows (18) of the ion exchange cartridge (10) are disposed in an axially upper quarter of the receiving space (16).

4. The ion exchange filter apparatus according to one of the preceding claims, **characterized in that** the exit windows (18) of the ion exchange cartridge (10) are covered by a screen mesh (30).

5. The ion exchange filter apparatus according to one of the preceding claims, **characterized in that** the housing (102) features an inlet nozzle (108), which is preferably disposed in a lower third of a housing height (122) of the housing (102).

6. The ion exchange filter apparatus according to one of the preceding claims, **characterized in that** the ion exchange cartridge (10) features at least one circumferential seal (22), in particular a circumferential seal, which seals substantially in the radial direction and which is disposed in particular at an axial end portion (20) facing away from the exit windows (18).

7. The ion exchange filter apparatus according to one of the preceding claims, **characterized in that** the ion exchange material (12) is present as bed.

8. The ion exchange filter apparatus according to one of the preceding claims, **characterized in that** the overlapping area (24) is designed as connecting section (28) for connecting the ion exchange cartridge (10) to the housing (102), in particular as a threaded section.

9. A use of an ion exchange cartridge (10) in an ion exchange filter apparatus (100) according to one of the preceding claims.

10. The use according to claim 9, **characterized in that** an external thread is present in the threaded section of the overlapping area (24).

11. A fuel cell system having an ion exchange filter apparatus (100) according to one of the claims 1 to 8.

## Revendications

1. Dispositif de filtre d'échangeur d'ions (100), notamment pour un système de pile à combustible, comprenant un boîtier (102) dans lequel est reçue une cartouche d'échangeur d'ions (10), le boîtier (102) comprenant un couvercle (112),
le boîtier (102) comprenant au moins une ouverture d'afflux (104) et au moins une ouverture d'écoulement (106) pour un milieu, l'ouverture d'afflux (104), au moins au nombre d'une, et l'ouverture d'écoulement (106), au moins au nombre d'une, perçant une paroi du boîtier (102),
un trajet d'écoulement (50) s'étendant de l'ouverture d'afflux (104) à travers la cartouche d'échangeur d'ions (10) jusqu'à l'ouverture d'écoulement (106),
la cartouche d'échangeur d'ions (10) présentant un récipient de cartouche (14) ayant un espace de réception (16) rempli d'un matériau échangeur d'ions (12) et délimité par une paroi (32) circonférentielle, qui présente une ou plusieurs fenêtres d'évacuation (18) sur ou réparties sur sa circonférence,
la ou les fenêtres d'évacuation (18) de la cartouche d'échangeur d'ions (10) étant disposées de manière décalée dans le sens axial (L) par rapport à l'ouverture d'écoulement (106) du boîtier (102), le trajet d'écoulement (50) présentant en aval des fenêtres d'évacuation (18) de la cartouche d'échangeur d'ions (10) au moins une déviation (52), notamment d'au moins 45 degrés, les fenêtres d'évacuation (18) de la cartouche d'échangeur d'ions (10) étant disposée axialement au-dessus de l'ouverture d'écoulement (106) du boîtier (102 par rapport à une direction de la gravité (54) dans une position de montage conformément à l'utilisation prévue,
**caractérisé en ce que** l'ouverture d'écoulement (106) est disposée dans un tiers supérieur d'une hauteur de boîtier (122) du boîtier (102) et **en ce que** la paroi du récipient de cartouche (14) est reliée par liaison de matière au couvercle (112) du boîtier (102), le couvercle (112) présentant une zone de recouvrement (24) chevauchant complètement en sens axial (L) les fenêtres d'évacuation (18) en formant une fente annulaire (26) et un trajet d'écoulement (50) d'un milieu présentant, à travers la cartouche d'échangeur d'ions (10) en aval des fenêtres d'évacuation (18), la déviation (52) à l'intérieur de la fente annulaire (26).

2. Dispositif de filtre d'échangeur d'ions selon la revendication 1, **caractérisé en ce que** l'ouverture d'écoulement (106) perce une paroi de carénage (110) du boîtier (102).

3. Dispositif de filtre d'échangeur d'ions selon l'une quelconque des revendications précédentes, **caractérisé en ce que** les fenêtres d'évacuation (18) de la cartouche d'échangeur d'ions (10) sont disposées dans un quart axialement supérieur de l'espace de réception (16).

4. Dispositif de filtre d'échangeur d'ions selon l'une quelconque des revendications précédentes, **caractérisé en ce que** les fenêtres d'évacuation (18) de la cartouche d'échangeur d'ions (10) sont couvertes d'un tissu de tamis (30).

5. Dispositif de filtre d'échangeur d'ions selon l'une quelconque des revendications précédentes, **caractérisé en ce que** le boîtier (102) présente une tubulure d'admission (108) qui est de préférence disposée dans un tiers inférieur d'une hauteur de boîtier (122) du boîtier (102).

6. Dispositif de filtre d'échangeur d'ions selon l'une quelconque des revendications précédentes, **caractérisé en ce que** la cartouche d'échangeur d'ions (10) présente au moins un joint d'étanchéité circonférentiel (22), notamment un joint d'étanchéité circonférentiel sensiblement étanchant en direction radiale, qui est notamment disposé sur une section d'extrémité axiale (20) opposée aux fenêtres d'évacuation (18).

7. Dispositif de filtre d'échangeur d'ions selon l'une quelconque des revendications précédentes, **caractérisé en ce que** le matériau échangeur d'ions (12) est présent en tant que lit.

8. Dispositif de filtre d'échangeur d'ions selon l'une quelconque des revendications précédentes, **caractérisé en ce que** la zone de recouvrement (24) est conçue en tant que section de raccordement (28) afin de raccorder la cartouche d'échangeur d'ions (10) au boîtier (102), notamment en tant que section de filetage.

9. Utilisation d'une cartouche d'échangeur d'ions (10) dans un dispositif de filtre d'échangeur d'ions (100) selon l'une quelconque des revendications précédentes.

10. Utilisation selon la revendication 9, **caractérisé en ce qu'**un filetage extérieur est présent dans la section de filetage de la zone de recouvrement (24).

11. Système de pile à combustible ayant un dispositif de filtre d'échangeur d'ions (100) selon l'une quelconque des revendications 1 à 8.
